# EUROPEAN PATENT APPLICATION

(11) **EP 1 186 444 A2**
(43) Date of publication of application: **13.03.2002**
(21) Application number: 01119791.0
(22) Date of filing: 28.08.2001
(51) Int. Cl.: B60B 9/00, B60B 9/02

(54) **Improved rim for a compliant wheel assembly**

(30) Priority: 07.09.2000 US 656691
(71) Applicant: THE GOODYEAR TIRE & RUBBER COMPANY, Akron, Ohio 44316-0001 (US)
(72) Inventor: Prakash, Amit, Hudson, Ohio 44236 (US); Vannan, Frederick Forbes Jr., Clinton, Ohio 44216 (US)
(74) Representative: Leitz, Paul

(57) **Abstract**

An improved rim (10) having an annular rim (12) for mounting a tire thereto; a control disk (14) for attaching to a vehicle hub, and a plurality of arcuately curved spokes (18) having fixed ends (17, 19) is disclosed. Each end (17, 19) is fixed to transmit torsional and vertical forces from the outer rim (12) to the central disk (14). The rim (10) has a vertical spring rate K at a static design load P, a nominal rim diameter unloaded of D and a static load radius (SLR) of less than 0.5D, preferably about 0.45D.

## Description

### Background of the Invention

This invention relates to vehicle wheels and, more particularly to an improved rim for vehicle wheels used in combination with pneumatic tires.

Pneumatic tires when used in combination with the rim have to meet certain fundamental and basic functions required of the vehicle. These functions can be summarized as having a load carrying capacity, providing cushioning ability, transmitting driving and braking forces, producing cornering force, supplying road holding ability, providing dimensional stability, providing adequate mileage, providing steering response, consuming minimum power, having minimum noise and vibration, and being safe and durable. Historically the tire provided all these functions while the rim provided primarily a support structure to be attached to the vehicle hub and axle. The rim is a very solid non-compliant component designed to meet the maximum loading conditions of the vehicle so when in use it has a sufficient safety margin. The rim structure had to endure an expected 3-g dynamic loading with ample fatigue life. In addition, the overall tire-wheel assembly had to provide adequate support at 1-g for good handling.

With the advent of a very low aspect ratio tires and runflat tires having sidewalls stiffening members, it has been apparent that the rim could become a major contributing component of the basic functions that were previously provided by the tire. In particular, besides having a basic load carrying capacity, the rim could provide a cushioning ability capability in addition to or complimentary to the tire. Most attempts to provide tire-like features in a rim have been in applications where the pneumatic tire was completely replaced and the rim and tire became an integral component.

In US-A- 4,739,810 entitled Convoluted Cone Wheel, a resilient wheel structure was provided wherein the tread was affixed directly onto the wheel structure eliminating any of the pneumatic characteristics of the tire. While this feature seems noble in its ability to eliminate the possibility of blow-outs and punctures, these tires have historically had terrible ride handling characteristics. This is due in part to the fact that the wheel itself is unable to envelope around small obstructions such as stones or gravel in the road. When impacting these obstructions in the road such as potholes, the entire tread pattern reacts as a single unit sending a shock wave back through the axle and into vehicle creating a very harsh feeling response to the impacts. It is an object of the present invention to provide a rim that is responsive to dynamic loads and is compliant to lateral forces and vertical forces providing a limited amount of deflection when subjected to either of these forces. The inventive rim is designed to work in combination with a pneumatic tire. Since the combination of tire and rim spring rates will have the desired result of an improved ride and handling vehicle wheel. These objectives can be achieved by an improved rim which is described in the description of the invention to follow below.

### Summary of the Invention

An improved rim having an annular rim for mounting a tire thereto and a central disk for attaching to a vehicle axle or hub is described. The improved rim has a plurality of spokes connected to and interposed between the annular rim and the central disk. The improvement in the rim design features a plurality of spokes, each spoke having an arcuate curvature extending outwardly from a plane parallel to the central disk. Each spoke has a first end fixed to the rim and a second end fixed to the disk. Each end being fixed to transmit torsional and radial forces from the outer rim to the central disk.

The rim has a vertical spring rate of (k) at a static design load P, a nominal rim diameter unloaded of D and a static loaded radius (SLR) of less than 0.5D. Preferably the static loaded radius (SLR) is less than 0.45D. The improved rim when used in combination with a tire has a torsional deflection Δ_{T} of less than 1.0 inch (2.54 cm) when subjected to a turning moment of 2g's x P x 1/2 the tire OD. Preferably Δ_{T} is greater than 0.1 inch (0.25 cm). In the preferred embodiment the pluralities of spokes are spaced at incremental locations of 90° or less around the rim. More preferably at an incremental location of 60° or less around the rim, most preferably at incremental locations of 45° or less around the rim. The plurality of spokes may be of one singular style or shape or can include two or more distinct shaped spokes.

### Brief Description of the Drawings

Figure 1 is a plan view of the rim according to the present invention.
Figure 2 is a cross-sectional view of the rim of Figure 1 taken along lines 2-2.

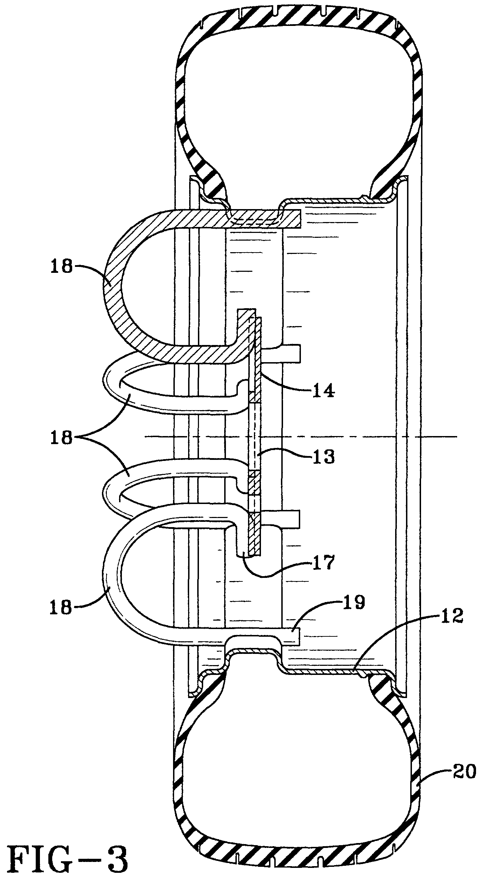

Figure 3 is a cross-sectional view of the rim of Figure 2 with a tire mounted to the rim.
Figure 4 is a plan view of a rim made according to the invention having different shaped spokes having the arcuate curvature of the present invention.

### Detailed Description of the Present Invention

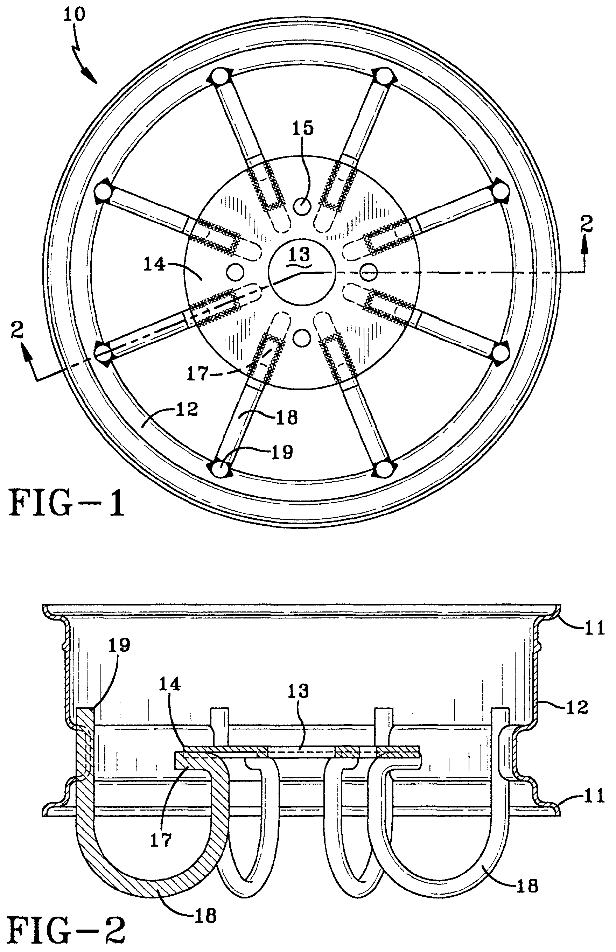

With reference to Figure 1 there is shown a side view of the rim 10. The rim 10 has a annular rim portion for mounting a tire thereto, the annular rim portion 12 has a plurality of spokes affixed at space locations around the inner peripheral surface of the rim. The spokes 18 have a radially outer end 19 and a radially inner end 17. The radially outer end 19 of the spokes are rigidly affixed to the inner surface of the rim as illustrated. Similarly, the radially inner end 17 is attached rigidly to an radially inner central disk 14. The radially inner central disk 14 is designed to be mounted to the vehicle hub. A plurality of holes 15 are provided for mounting onto the studs of the vehicle hub. A central hole 13 is provided as a clearance hole adapted to fit over a protruding portion of the vehicle hub.

With reference to Figure 2 the annular rim 12 is shown having a pair of annular flanges 11. These annular flanges 11 are adapted to restrain the bead portions of the pneumatic tire. As further illustrated in Figure 2 each spoke 18 has an arcuate curvature extending outwardly from a point parallel to the central disk 14. As shown the arcuate curvature exhibits a single radius R1 as measured to a midpoint of the cross-section of the spoke 18. While a single radius of curvature is believed to be most preferable, any multiple of curvatures of the spokes 18 can be provided to achieve the effective spring rate and deflection characteristics needed for the rim 10 to achieve the proper cushioning and dampening characteristics.

An alternative embodiment of the rim 10 not illustrated has the spokes 18 being substantially smaller dimensionally and positioned such that they laterally extend outwardly not much more than the wheel well of the rim and substantially inward of the axially outer flanges 11 of the rim 10.

It is believed important that the rim 10 shall have a vertical spring rate of K at a static design load P and a nominal diameter unloaded of D and a static loaded radius (SLR) of less than 0.5D. This means for a typical passenger vehicle having a 4,000 pound (1816 kg) loaded vehicle weight, the design load per when uniformly distributed would be 1000 lb (454 kg) per wheel position. The overall wheel assembly spring rate K should be approximately 800 to 1200 lb/inch (142 to 214 kg/cm) at a nominal rim diameter unloaded of 15 inches (38 cm). The compliant rim 10 can contribute a portion of this spring rate under load by deflecting at the rim such that a static loaded radius of less than 7.5 inches (19 cm), preferably 6.75 (17 cm) inches results. As a general rule of thumb it is believed that the rim's static loaded radius (SLR) should be less than 45% D. In addition to this vertical deflection characteristic of the rim, it is important that the rim 10 have a torsional deflection capability. That torsional deflection Δ_{T} should be less than one inch (2.54 cm) when subjected to a turning moment of 2g's x P x 1/2 the tire OD. This ability of the rim 10 to deflect under a 2g load by approximately one inch or less enables the vehicle to provide some lateral contribution to steering responsiveness which will enable the tire footprint to keep a flatter profile in hard turning maneuvers. Preferably, Δ_{T} should be greater than 0.1 inches (0.25 cm).

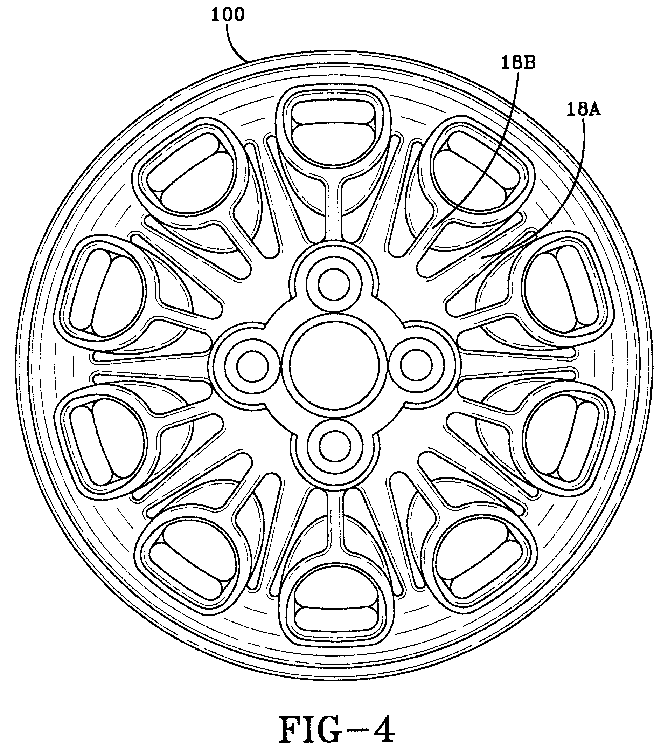

With reference to Figure 4, a stylized prospective view of a rim 100 of the present invention is shown. The rim 100 preferably is a cast aluminum rim having spokes of different cross-sectional shapes as illustrated, the spokes 18A being adjacent to spokes 18B in a repeating pattern around the rim 10.

The rims 10, 100 described above can be made out of steel, aluminum, magnesium, or any material that will provide the proper fatigue fracture capability and torsional resistance necessary to achieve a maximum 3 G loading under dynamic conditions and survive the necessary cyclic fatigue fracture capabilities required of vehicle rims. It is further believed possible with the rim of the present invention that tires having substantially different performance characteristics than were possible heretofore can be invented and developed for use with the rim 10. This is because the rim 10 will now be a contributing factor to the ride and handling characteristics of the tire when used in combination as a wheel assembly.

## Claims

1. A rim (10) having an annular rim (12)for mounting a tire thereto, a central disk (14) for attaching to a vehicle axle or hub, a plurality of spokes (18) contacted to and interposed between the annular rim and the central disk; **characterized by** each spoke (18) having an arcuate curvature extending outwardly from a plane parallel to the central disk (14), each spoke having a first end (19) fixed to the rim and a second end (17) fixed to the disk, each end being fixed to transmit torsional and radial forces from the outer rim (12) to the central disk ((14).

2. The rim (10) of claim 1 wherein the rim has a vertical spring rate K at a static design load P, a nominal rim diameter unloaded of D and a static loaded radius (SLR) of less than 0.5 D.

3. The rim (10) of claim 1 wherein the static loaded radius (SLR) is less than 0.45D.

4. The rim (10) of claim 1 in combination with a tire (20) wherein the rim has a torsional deflection Δ_{T} of less than 1.0 inch (2.54 cm) when subject to a turning moment of 2g's x P x 1/2 the tire OD.

5. The rim (10) and tire (20) combination of claim 4 wherein the torsional deflection Δ_{T} is greater than 0.1 inch (.25 cm).

6. The rim (10) of claim 1 wherein the plurality of spokes (18) are spaced at incremental locations of 90° or less around the rim.

7. The rim (10) of claim 8 wherein the plurality of spokes (18) are spaced at incremental locations of 60° or less around the rim.

8. The rim (10) of claim 7 wherein the plurality of spokes (18) are spaced at incremental locations of 45° or less around the rim.

9. The rim (10) of claim 8 wherein the plurality of spokes (18) include two or more distinct shaped spokes.
